(19) Europäisches Patentamt
European Patent Office
Office européen des brevets

(11) EP 2 742 101 B1

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **12733759.0**

(22) Anmeldetag: **12.07.2012**

(51) Int Cl.:
***C09D 5/08*** (2006.01) ***C09D 133/02*** (2006.01)
***C09D 135/00*** (2006.01) ***C08K 5/17*** (2006.01)

(86) Internationale Anmeldenummer:
**PCT/EP2012/063686**

(87) Internationale Veröffentlichungsnummer:
**WO 2013/020771 (14.02.2013 Gazette 2013/07)**

(54) **ZUBEREITUNG VON ITACONSÄURE HOMO- ODER COPOLYMEREN UND AMIN- ODER AMIDHALTIGEN ALKOHOLEN FÜR DIE METALLOBERFLÄCHENBEHANDLUNG**

PREPARATION OF ITACONIC ACID HOMO- OR COPOLYMERS AND AMINE- OR AMIDE-CONTAINING ALCOHOLS FOR TREATING METAL SURFACES

PRÉPARATION D'HOMO- OU COPOLYMÈRES DE L'ACIDE ITACONIQUE ET D'ALCOOLS À TENEUR EN AMINES OU AMIDES POUR LE TRAITEMENT DES SURFACES MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2011 EP 11177083**

(43) Veröffentlichungstag der Anmeldung:
**18.06.2014 Patentblatt 2014/25**

(73) Patentinhaber: **BASF SE**
**67056 Ludwigshafen (DE)**

(72) Erfinder:
- **FLEISCHHAKER, Friederike**
  **67065 Ludwigshafen (DE)**
- **SCHADE, Christian**
  **67063 Ludwigshafen (DE)**
- **MÜLLER-CRISTADORO, Anna**
  **65529 Waldems (DE)**

(56) Entgegenhaltungen:
**EP-A1- 2 072 578** **DE-A1-102004 041 127**
**DE-A1-102005 038 608** **US-A- 5 718 728**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 742 101 B1

Printed by Jouve, 75001 PARIS (FR)

## Beschreibung

Die vorliegende Erfindung betrifft eine Zubereitung zur Passivierung von metallischen Oberflächen enthaltend Itaconsäure Homo- oder Copolymere und amin- oder amidhaltige Alkohole, ein Verfahren zum Passivieren von metallischen Oberflächen durch Behandlung der Oberfläche mit der erfindungsgemäßen Zubereitung, Passivierungsschichten und metallische Oberflächen, die mittels des erfindungsgemäßen Verfahrens erhältlich sind, sowie die Verwendung der erfindungsgemäßen Zubereitung zur Passivierung einer Metalloberfläche, insbesondere bei der Vorbehandlung von Bandmetallen.

Zur Herstellung von flächigen metallischen Werkstücken wie beispielsweise weiße Ware, Geräteverkleidungen, Fassadenverkleidungen, Deckenverkleidungen oder Fensterprofilen, Automobilteilen, Karosserieteilen, werden als Rohmaterial heutzutage üblicherweise lange Metallbänder eingesetzt, die durch Heisswalzen und/oder Kaltwalzen von Metallblöcken (sogenannten "Brammen") hergestellt werden und zum Lagern und Transportieren zu Rollen (sogenannten "Coils") aufgewickelt werden.

Die Metallbänder werden zerteilt und mittels geeigneter Techniken wie Stanzen, Bohren, Falzen, Profilieren und/oder Tiefziehen zu den gewünschten Formteilen ausgeformt. Größere Bauteile, wie beispielsweise Automobilkarosserien werden gegebenenfalls durch Verschweißen mehrerer Einzelteile zusammengefügt.

Die Korrosionsschutzbehandlung derartiger metallischer Materialien erfolgt üblicherweise in mehrstufigen Prozessen, und die Oberfläche behandelter Metalle weist mehrere verschiedene Schichten auf. Eine Korrosionsschutzbehandlung kann an verschiedenen Stellen des Herstellprozesses vorgenommen werden. Hierbei kann es sich sowohl um temporären Korrosionsschutz wie um permanenten Korrosionsschutz handeln. Ein temporärer Schutz wird beispielsweise nur zum Lagern oder Transportieren eines Metallbandes oder sonstigen metallischen Werkstückes aufgebracht und vor der endgültigen Verarbeitung wieder entfernt.

Korrosionsschutzschichten, welche auf Metallbänder aufgebracht werden, die anschließend zu Formteilen ausgefügt werden sollen, müssen neben der reinen Korrosionsschutzwirkung auch noch gute mechanische Eigenschaften aufweisen. Insbesondere müssen die Korrosionsschutzschichten eine ausreichende Dehnbarkeit haben, damit sie beim Umformen nicht reißen und somit an diesen Stellen kein ausreichender Korrosionsschutz mehr besteht.

Der Schutz metallischer Bauteile vor Korrosion besitzt große wirtschaftliche Bedeutung. Technisch und wirtschaftlich von besonderer Bedeutung ist insbesondere die Korrosionsschutzbehandlung von Aluminium-Oberflächen sowie der Oberflächen von verzinkten Metallen, insbesondere von galvanisch verzinktem oder feuerverzinktem Eisen bzw. Stahl. Der Korrosionsschutz des Zinks beruht darauf, dass es unedler ist als der metallische Werkstoff selbst und deshalb zunächst selbst korrodiert. Der metallische Werkstoff an sich bleibt unversehrt, solange er noch durchgehend mit Zink bedeckt ist.

In Gegenwart von Luftsauerstoff bildet sich auf der Oberfläche von Zn oder Zn-Legierungen, Al oder Al-Legierungen zunächst eine dünne Oxidschicht, die den korrosiven Angriff auf das darunter liegende Metall je nach den äußeren Bedingungen mehr oder weniger verlangsamt.

Um die schützende Wirkung einer solchen Oxidschicht zu verstärken, werden Al- und Zn-Oberflächen im Regelfalle einer zusätzlichen Passivierungsbehandlung unterzogen. Im Zuge einer derartigen Behandlung wird meistens ein Teil des zu schützenden Metalls/Metalloxids in Form von Metallionen gelöst, die dann in die aufgetragene Passivierungsschicht eingebaut werden. Dieser Film ähnelt dem ohnehin vorhandenen Oxidfilm, bietet aber einen stärkeren Schutz. Er wird üblicherweise als Passivierungsschicht bezeichnet. Er verbessert häufig auch die Haftung von auf dem Metall aufgebrachten Lackschichten. Anstelle des Begriffs "Passivierungsschicht" wird daher oft der Begriff "Konversionsschicht" synonym verwendet, manchmal auch der Begriff "Vorbehandlungsschicht". Passivierungsschichten sind vergleichsweise dünn und weisen üblicherweise eine Dicke von nicht mehr als 3 $\mu$m auf.

Zur Verstärkung des Korrosionsschutzes werden auf die Passivierungsschicht im Regelfalle zusätzliche (Lack)schichten aufgebracht. Meist handelt es sich um eine Kombination mehrerer Lackschichten, die jeweils unterschiedlichen Zwecken dienen. Sie dienen dazu, die Passivierungsschicht und das Metall vor korrosiven Gasen und/oder Flüssigkeiten aber auch vor mechanischen Beschädigungen, wie beispielsweise Steinschlag zu schützen und natürlich auch ästhetischen Zwecken. Lackschichten sind üblicherweise deutlich dicker als Passivierungsschichten. Typische Dicken reichen von 2 $\mu$m bis 400 $\mu$m.

Die Passivierung kann zum permanenten Korrosionsschutz oder auch nur zum temporären Korrosionsschutz eingesetzt werden. Ein temporärer Schutz wird nur zum Lagern oder Transportieren eines Metallbleches oder sonstigen metallischen Werkstückes eingesetzt und wird vor der endgültigen Verarbeitung wieder entfernt.

Bisher wurden Passivierungsschichten auf Zink- oder Aluminiumoberflächen üblicherweise durch Behandlung des zu schützenden Werkstücks mit wässrigen, sauren Lösungen von $CrO_3$ erhalten. Der Mechanismus einer derartigen Passivierung ist komplex. Unter anderem wird metallisches Zn oder Al aus der Oberfläche gelöst und fällt in Form von amorphen Zink-Chromoxiden bzw. Aluminium-Chromoxiden wieder aus. Die Schichten können aber auch noch Fremdionen und/oder weitere Komponenten aus der Behandlungslösung enthalten. Insbesondere ist es bei der Behandlung mit Chromsäure nicht zu vermeiden, dass auch ein gewisser Anteil von Cr(VI) in die Passivierungsschicht eingebaut wird.

Um die Behandlung mit karzinogenen Cr(VI)-Lösungen zu vermeiden, ist die Behandlung der metallischen Oberflächen mit sauren, wässrigen Cr(III)-Lösungen vorgeschlagen worden. Beispielhaft sei auf US 4,384,902 verwiesen. Es gibt jedoch zunehmend Kunden am Markt, die völlig Chrom-freie Verfahren zum Passivieren wünschen. Zur Vermeidung des Einsatzes von Cr(VI) wie Cr(III) gewinnt daher der Einsatz von Polymeren zunehmend an Bedeutung.

DE-A 195 16 765 offenbart ein chrom- und fluoridfreies Verfahren zur Erzeugung von Konversionsschichten auf metallischen Oberflächen aus Zn oder Al. Die zum Passivieren eingesetzte saure Lösung umfasst ein wasserlösliches Polymeres, Phosphorsäure sowie Al-Chelatkomplexe. Optional können auch Polymere und Co(polymere) von (Meth)acrylsäure eingesetzt werden.

DE-A 197 54 108 offenbart ein chromfreies wässriges Korrosionsschutzmittel, welches aber toxische Hexafluoro-Anionen von Ti(IV) und/oder Zr(IV), Vanadiumionen, Cobaltionen und Phosphorsäure umfasst. Optional können weiterhin noch verschiedene filmbildende Polymere zugegeben werden, darunter auch carboxylgruppenhaltige Copolymere wie Acrylsäure/Maleinsäure-Copolymere.

WO 2004/074372 A1 betrifft eine saure wässrige Zubereitung zum Passivieren von Metalloberflächen enthaltend Copolymere aus 50 bis 99,9 Gew.-% (Meth)acrylsäure, 0,1 bis 50 Gew.-% saure Comonomere, wie beispielsweise ethylenisch ungesättigte Dicarbonsäuren, und/oder polymerisierbare Phosphor- und/oder Phosphonsäuren. Bei der Dicarbonsäure kann es sich u.a. auch um Itaconsäure handeln. Die Zusammensetzung kann tertiäre alkalische Amine, bevorzugt Hydroxylamine wie Mono-, Di- und Triethanolamin, enthalten. Andere aminhaltige Alkohole werden nicht erwähnt. Der Zusatz der Hydroxylamine wird allgemein erwähnt und im speziellen nur für ein Copolymer aus Acrylsäure und Maleinsäureanhydrid gezeigt, nicht aber für die erfindungsgemäße Kombination.

WO 2006/021309 A1 offenbart ein Verfahren zum Passivieren von metallischen Oberflächen unter Verwendung einer sauren wässrigen Zubereitung, enthaltend Itaconsäure Homo- oder Copolymere. Die Itaconsäurepolymeren werden bei einer Polymerisationstemperatur von weniger als 120°C hergestellt, wodurch ein besserer Korrosionsschutz gegenüber Acrylsäure-Maleinsäure-Copolymeren erreicht wird. Zubereitungen dieser Itaconsäure Homo- oder Copolymeren enthaltend Alkoholamine werden nicht beschrieben.

Die vorbeschriebenen Zubereitungen sind im Hinblick auf den Korrosionsschutz, insbesondere bezüglich der Passivierung von Bandmetallen ("coll-coating") noch verbesserungsbedürftig.

Aufgabe der Erfindung ist es eine verbesserte Zubereitung zur Passivierung metallischer Oberflächen bereitzustellen, die insbesondere vorteilhaft bei der Vorbehandlung von Bandmetallen, dem sogenannten "pre-treatment" angewendet werden kann. Bevorzugt sollte es sich dabei um eine chromfreie und fluoridfreie wässrige Zubereitung handeln.

Gegenstand der Erfindung ist eine Zubereitung zur Passivierung von metallischen Oberflächen, enthaltend

a) mindestens ein Itaconsäure-Homo- oder Copolymer (A), wobei das Polymer aus folgenden monomeren Einheiten aufgebaut ist:

(a1) 0,1 bis 100 Gew.-% Itaconsäure,
(a2) 0 bis 99,9 Gew.-% mindestens einer monoethylenisch ungesättigten Monocarbonsäure, sowie
(a3) 0 bis 40 Gew.-% mindestens eines weiteren von (a1) und (a2) verschiedenen-ethylenisch ungesättigten Monomers, welches saure Gruppen aufweist,
und/oder
(a4) 0 bis 75 Gew.-% mindestens eines weiteren von (a1), (a2) und (a3) verschiedenen ethylenisch ungesättigten Monomers,
wobei die Menge jeweils auf die Gesamtmenge aller im Copolymer einpolymerisierten Monomere bezogen ist;

b) Wasser oder ein anderes Lösungsmittel, das geeignet ist, das Polymer (A) zu lösen, zu dispergieren, zu suspendieren oder zu emulgieren, als Komponente (B); und

c) mindestens einen amin- oder amidhaltigen Alkohol (C),

wobei Zubereitungen enthaltend mindestens ein Copolymer (A) aus (a1) 0,1 bis 50 Gew.% Itaconsäure, und (a2) 50 bis 99,9 Gew.% (Meth)acrylsäure, Komponente (B), und Mono-, Di- und/oder Triethanolamin als Komponente (C) ausgenommen sind.

Weiterer Gegenstand der Erfindung ist ein Verfahren zum Passivieren von metallischen Oberflächen mit Hilfe der erfindungsgemäßen Zubereitung. Die Erfindung betrifft weiterhin eine Passivierungsschicht auf einer metallischen Oberfläche, die durch das Verfahren erhältlich ist, sowie metallische Oberflächen umfassend eine derartige Passivierungsschicht.

Überraschenderweise wurde gefunden, dass mit der erfindungsgemäßen Zubereitung behandelte Metalloberflächen deutlich resistenter gegen Korrosion sind, als solche gemäß dem Stand der Technik. Die Passivierung der

Metalloberflächen, insbesondere im Bereich "pre-treatment", ist deutlich verbessert.

Zu der Erfindung ist im Einzelnen das Folgende auszuführen:

Die in der erfindungsgemäßen Zubereitung eingesetzten Itaconsäure- Homo- oder Copolymere (A) sind in Wasser oder mindestens 50 Gew.-% Wasser enthaltenden wässrigen Lösemittelgemischen löslich oder zumindest dispergierbar, wobei dem Fachmann bekannt ist, dass die Löslichkeit von COOH-reichen Polymeren stark pHabhängig sein kann. Er bezieht sich daher hier auf die pH-Werte, bei denen die Polymere zur Passivierung eingesetzt werden, d.h. auf eine saure Lösung, insbesondere auf den Bereich von pH 0,5 bis 6. Der Begriff "wasserdispergierbar" bedeutet, dass die Lösung zwar nicht ganz klar ist, aber das Polymer homogen darin verteilt ist und sich auch nicht absetzt. Bevorzugt sollten die eingesetzten Polymere lückenlos mit Wasser mischbar sein, auch wenn dies nicht in jedem Falle absolut notwendig ist. Sie müssen aber zumindest in einem solchen Maß wasserlöslich sein, dass die Passivierung mittels der erfindungsgemäßen Zubereitung möglich ist. Im Regelfalle sollten die eingesetzten Polymere eine Löslichkeit von mindestens 50 g/l, bevorzugt 100 g/l und besonders bevorzugt mindestens 200 g/l aufweisen.

Bevorzugt handelt es sich um Polymere, die wasserlöslich sind.

Bei dem Monomer (a1) zur Herstellung des erfindungsgemäß eingesetzten Homo- oder Copolymers handelt es sich um Itaconsäure:

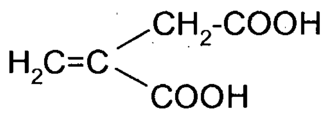

Die Itaconsäure kann auch in Form ihrer Salze, beispielsweise als Alkali- oder Ammoniumsalz eingesetzt werden. Weiterhin können auch Derivate der Itaconsäure eingesetzt werden, die in wässriger Lösung leicht zu Itaconsäure hydrolysieren, wie beispielsweise das entsprechende Anhydrid, Mono- oder Diester oder Säureamide. Selbstverständlich können auch Gemische derartiger Derivate eingesetzt werden.

Bei dem erfindungsgemäß eingesetzten Polymer kann es sich um ein Homopolymer oder bevorzugt ein Copolymer von Itaconsäure handeln.

Die Menge an Itaconsäure in den Polymeren beträgt 0,1 bis 100 Gew.-%, bevorzugt 10 bis 70 Gew.-%, besonders bevorzugt 15 bis 65 Gew.-%, ganz besonders bevorzugt 20 bis 50 Gew.-%, insbesondere 25 bis 45 Gew.-%, wobei diese Angabe auf die Summe aller Monomere im Polymer bezogen ist.

Das erfindungsgemäß eingesetzte Polymer kann weiterhin bis zu 99,9 Gew.-% eines oder mehrerer Monomere (a2) umfassen. Hierbei handelt es sich um monoethylenisch ungesättigte Monocarbonsäuren.

Beispiele geeigneter monoethylenisch ungesättigter Monocarbonsäuren (a2) umfassen Acrylsäure, Methacrylsäure, Crotonsäure, Vinylessigsäure oder auch $C_1$-$C_4$ Halbester monoethylenisch ungesättigter Dicarbonsäuren. Bevorzugt sind Acrylsäure und Methacrylsäure, besonders bevorzugt ist Acrylsäure.

Selbstverständlich können auch Gemische mehrerer verschiedener, monoethylenisch ungesättigter Monocarbonsäuren eingesetzt werden.

Bevorzugt beträgt die Menge aller Monomere (a2) zusammen 30 bis 90 Gew.-%, besonders bevorzugt 30 bis 70 Gew.-%, ganz besonders bevorzugt 35 bis 65 Gew.-%

Optional kann das erfindungsgemäß eingesetzte Copolymer weiterhin 0 bis 40 Gew.-% mindestens eines weiteren - von (a1) und (a2) verschiedenen- ethylenisch ungesättigten Monomers (a3) enthalten. Die Monomere (a3) weisen jeweils mindestens eine saure Gruppe auf. Besonders bevorzugt handelt es sich jeweils um monoethylenische Monomere. Die Monomere (a3) sind radikalisch polymerisierbar.

Bei den Monomeren (a3) kann es sich beispielsweise um carboxylgruppenhaltige Monomere (a31), Phosphorsäuregruppen und/oder Phosphonsäuregruppen umfassende Monomere (a32) oder Sulfonsäuregruppen umfassende Monomere (a33) handeln.

Die Monomere (a3) können auch in Form ihrer Salze, beispielsweise als Alkali- oder Ammoniumsalze eingesetzt werden. Weiterhin können auch solche Derivate der Monomere (a3) eingesetzt werden, welche in wässriger Lösung leicht zu den freien Säuren hydrolysieren, wie beispielsweise Anhydride, Mono- oder Diester oder Säureamide. Selbstverständlich können auch Gemische derartiger Derivate eingesetzt werden.

Beispiele für carboxylgruppenhaltige Monomere (a31) umfassen insbesondere ethylenisch ungesättigte Dicarbonsäuren wie z.B. Maleinsäure, Mesaconsäure, Citraconsäure, Fumarsäure, oder Methylenmalonsäure. Bevorzugt als Monomer (a31) ist Maleinsäure bzw. Maleinsäureanhydrid.

Beispiele geeigneter Monomere (a32) umfassen Vinylphosphonsäure, Phosphorsäuremonovinylester, Allylphosphonsäure, Phosphorsäuremonoallylester, 3-Butenylphosphonsäure, Phosphorsäure(mono-3-butenyl)ester,

Phosphorsäuremono-(4-vinyl-oxybutyl)ester, Acrylsäure(phosphonoxyethyl)ester, Methacrylsäure(phosphonoxyethyl)ester, Phosphorsäuremono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxy-propyl)ester, Phosphorsäuremono-2-(allylox-1-phosphonoxymethylethyl)ester, 2-Hydroxy-4-vinyloxymethyl-1,3,2-dioxaphosphol, 2-Hydroxy-4-allyloxymethyl-1,3,2-dioxaphosphol, 2-Methacrylamidoethylphosphorsäure. Es können auch Salze und/oder Ester, insbesondere $C_1$-$C_8$-Mono-, Di- sowie gegebenenfalls Trialkylester der Phosphorsäure und/oder Phosphonsäuregruppen aufweisenden Monomere eingesetzt werden.

Ein bevorzugtes Monomer (a32) ist Vinylphosphonsäure bzw. hydrolysierbare Ester davon.

Beispiele für sulfonsäuregruppenhaltige Monomere (a33) umfassen Allylsulfonsäure, Methallylsulfonsäure, Styrolsulfonat, Vinylsulfonsäure, Allyloxybenzolsulfonsäure oder 2-Acrylamido-2-methylpropansulfonsäure, 2-(Methacyloyl)ethylsulfonsäure und deren Alkalimetall-Salze.

Selbstverständlich können auch Gemische mehrerer verschiedener Monomerer (a3) eingesetzt werden. Bevorzugt sind Carboxylgruppen umfassende Monomere (a31) sowie Phosphorsäuregruppen und/oder Phosphonsäuregruppen umfassende Monomere (a32). Besonders bevorzugt unter den Monomeren (a3) sind Phosphonsäuregruppen umfassende Monomere (a32), insbesondere Vinylphosphonsäure bzw. hydrolysierbare Ester davon.

Falls Monomere (a3) vorhanden sind, beträgt deren Menge zusammen bevorzugt 0,1 bis 40 Gew.-%, besonders bevorzugt 1 bis 35 Gew.-% und ganz besonders bevorzugt 5 bis 25 Gew.-%.

Weiterhin kann das Copolymer optional noch 0 bis 30 Gew.-% mindestens eines weiteren - von (a1), (a2) und (a3) verschiedenen - radikalisch polymerisierbaren, ethylenisch ungesättigten Monomers (a4) enthalten. Darüber hinaus werden keine anderen Monomere eingesetzt.

Die Monomere (a4) dienen zur Feinsteuerung der Eigenschaften des Copolymers. Sie werden vom Fachmann je nach den gewünschten Eigenschaften des Copolymers ausgewählt. Bevorzugt handelt es sich ebenfalls um monoethylenisch ungesättigte Monomere. In besonderen Fällen können aber auch geringe Mengen von Monomeren mit mehreren polymerisierbaren Gruppen eingesetzt werden. Hierdurch kann das Copolymer in geringem Umfange vernetzt werden.

Beispiele von Monomeren (a4) umfassen $C_1$-$C_8$-Alkylester oder $C_1$-$C_4$-Hydroxyalkylester der (Meth)acrylsäure, wie Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth)acrylat oder Butandiol-1,4-monoacrylat. Bei den Alkoholkomponenten in den (Meth)acrylestern kann es sich auch um alkoxylierte Alkohole handeln. Zu nennen sind hier insbesondere alkoxylierte $C_1$-$C_{18}$-Alkohole, welche 2 bis 80 Mol Ethylenoxid, Propylenoxid, Butylenoxid oder Mischungen davon aufweisen. Beispiele derartiger alkoxylierter Produkte umfassen Methylpolyglykol(meth)acrylat oder (Meth)acrylsäureester von mit 3, 5, 7, 10 oder 30 Mol Ethylenoxid umgesetztem $C_{13}$/$C_{15}$-Oxoalkohol bzw. deren Mischungen, (Methyl)Styrol, Maleinsäureimid, Maleinsäure-N-Alkylimid, Maleinsäurehalbamide oder Maleinsäurehalbester.

Weiterhin geeignet sind Vinyl- oder Allylether wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether oder Methyldiglykolvinylether bzw. die entsprechenden Allylverbindungen. Ebenfalls eingesetzt werden können Vinylester wie beispielsweise Vinylacetat oder Vinylpropionat.

Beispiele basischer Monomere umfassen Acrylamide, die gegebenenfalls z.B. durch Alkyl, Hydroxyalkyl substituiert sein können, wie z.B. Acrylamid, Methacrylamid, N-tert.-Butylacrylamid oder N-Methyl(meth)acrylamid. Weiterhin können auch basische Monomere wie 1-Vinylimidazol und N-Vinylpyrrolidon eingesetzt werden.

Beispiele für vernetzende Monomere umfassen Moleküle mit mehreren ethylenisch ungesättigten Gruppen, beispielsweise Di(meth)acrylate wie Ethylenglykoldi(meth)acrylat oder Butandiol-1,4-di(meth)acrylat oder Poly(meth)acrylate wie Trimethylol-propantri(meth)acrylat oder auch Di(meth)acrylate von Oligo- oder Polyalkylenglykolen wie Di-, Tri- oder Tetraethylenglykoldi(meth)acrylat. Weitere Beispiele umfassen Vinyl(meth)acrylat, Allyl(meth)acrylat, Divinylethylenharnstoff oder Butandioldivinylether. Geeignet sind ebenfalls Di- und Oligo-Allylether von Polyhydroxyverbindungen, beispielsweise Pentaerythrittri- oder tetraallylether.

Selbstverständlich kann auch ein Gemisch verschiedener Monomerer (a4) eingesetzt werden. Die Menge aller eingesetzten Monomere (a4) zusammen beträgt 0 bis 75 Gew.-% bezogen auf die Gesamtmenge aller für das Verfahren eingesetzten Monomere. Bevorzugt beträgt die Menge 0 bis 50 Gew.-%, besonders bevorzugt 0 bis 15 und ganz besonders bevorzugt 0 bis 10 Gew.-%. Falls vernetzend wirkende Monomere (a4) anwesend sind, sollte deren Menge im Regelfalle 5 %, bevorzugt 2 Gew.-% bezogen auf die Gesamtmenge aller für das Verfahren eingesetzten Monomere nicht überschreiten. Sie kann beispielsweise 10 ppm bis 1 Gew.-% betragen.

Der Fachmann wählt Art und Menge der eingesetzten Monomere je nach der gewünschten Passivierung. Er wird hierbei berücksichtigen, dass das Polymer wasserlöslich oder wasserdispergierbar sein soll. Monomere, welche die Wasserlöslichkeit des Polymers verschlechtern könnten, werden vom Fachmann daher nur in solchen Mengen eingesetzt, dass keine negativen Effekte auftreten können.

Bevorzugt sind Copolymere aus Itaconsäure und Acrylsäure, besonders bevorzugt Copolymere aus 35 bis 65 Gew.-% Itaconsäure und 35 bis 65 Gew.-% Acrylsäure, ganz besonders bevorzugt 40 bis 60 Gew.-% Itaconsäure und 40 bis 60 Gew.-% Acrylsäure, insbesondere 51 bis 60 Gew.-% Itaconsäure und 40 bis 49 Gew.-% Acrylsäure.

Weiterhin bevorzugt sind Terpolymere aus Itaconsäure, Acrylsäure sowie Vinylphosphonsäure, besonders bevorzugt aus 20 bis 50 Gew.-% Itaconsäure, 30 bis 50 Gew.-% Acrylsäure sowie 1 bis 30 Gew.-% Vinylphosphonsäure, insbesondere 35 bis 45 Gew.-% Itaconsäure, 40 bis 50 Gew.-% Acrylsäure sowie 5 bis 25 Gew.-% Vinylphosphonsäure.

Die eingesetzten Monomere werden radikalisch in wässriger Lösung polymerisiert.

Der Begriff "wässrig" bedeutet, dass das eingesetzte Lösungs- oder Verdünnungsmittel Wasser als Hauptbestandteil aufweist. Daneben können aber auch noch Anteile von mit Wasser mischbaren organischen Lösungsmitteln vorhanden sein. Dies kann beispielsweise erforderlich sein, um die Löslichkeit bestimmter Monomere, insbesondere der Monomere (a4) im Reaktionsmedium zu verbessern.

Das eingesetzte Lösungs- oder Verdünnungsmittel weist dementsprechend mindestens 50 Gew.-% Wasser bezüglich der Gesamtmenge des Lösungsmittels auf. Daneben können ein oder mehrere mit Wasser mischbare Lösungsmittel eingesetzt werden. Zu nennen sind hier insbesondere Alkohole, beispielsweise Monoalkohole wie Ethanol, Propanol oder Isopropanol, Dialkohole wie Glykol, Diethylenglykol oder Polyalkylenglykole bzw. Derivate davon. Bevorzugte Alkohole sind Propanol und Isopropanol. Bevorzugt beträgt der Wasseranteil mindestens 70 Gew.-%, stärker bevorzugt mindestens 80 Gew.-%, besonders bevorzugt mindestens 90 Gew.-%. Ganz besonders bevorzugt wird ausschließlich Wasser eingesetzt.

Die Durchführung der radikalischen Polymerisation ist dem Fachmann prinzipiell bekannt. Ein bevorzugtes Herstellungsverfahren für erfindungsgemäß eingesetzte Itaconsäure Homo- oder Copolymere wird in WO 2006/021309 offenbart, auf welche ausdrücklich Bezug genommen wird.

Gemäß einer bevorzugten Ausführungsform wird die Polymerisation der erfindungsgemäß eingesetzten Monomeren (a1) bis (a4) bei einer Temperatur von weniger als 120°C vorgenommen. Abgesehen davon kann die Temperatur vom Fachmann innerhalb weiter Grenzen je der Art der eingesetzten Monomere, des Initiators und dem gewünschten Ergebnis variiert werden. Bewährt hat sich hierbei eine Mindesttemperatur von etwa 60°C. Die Temperatur kann während der Polymerisation konstant gehalten werden oder es können auch Temperaturprofile gefahren werden. Bevorzugt beträgt die Polymerisationstemperatur 75 bis 115°C, stärker bevorzugt 80 bis 110°C und besonders bevorzugt 90 bis 108°C und ganz besonders bevorzugt 95 bis 105°C.

Erfindungsgemäße Zubereitungen, die Itaconsäure Homo- oder Copolymere (A) enthalten, welche durch radikalische Polymerisation in wässriger Lösung bei einer Temperatur von weniger als 120°C erhalten wurden, sind besonders bevorzugt.

Die Polymerisation kann in üblichen Apparaturen zur radikalischen Polymerisation vorgenommen werden. Sofern man oberhalb der Siedetemperatur des Wassers bzw. des Gemisches aus Wasser und weiteren Lösemitteln arbeitet, wird in einem geeigneten Druckgefäß gearbeitet, ansonsten kann drucklos gearbeitet werden. Bevorzugt wird die Polymerisation drucklos vorgenommen. Es kann beispielsweise unter Rückfluss polymerisiert werden.

Bei der Polymerisation hat es sich regelmäßig bewährt, Itaconsäure (a1) bzw. deren Derivate in wässriger Lösung vorzulegen. Danach können die Monocarbonsäure (a2) sowie der Initiator, zweckmäßigerweise ebenfalls in wässriger Lösung zudosiert werden. Bewährt haben sich Zulaufzeiten von 0,5 h bis 24 h, bevorzugt 1 h bis 12h.

Auf diese Art und Weise wird die Konzentration der reaktionsfreudigeren Monocarbonsäuren (a2) in der wässrigen Lösung relativ gering gehalten. Hierdurch verringert sich die Tendenz zur Reaktion der Monocarbonsäure mit sich selbst und es wird ein gleichmäßigerer Einbau der Itaconsäureeinheiten in das Copolymere erreicht. Sofern optional verwendete Monomere (a3) und/oder (a4) reaktionsträge sind, ist es ebenfalls empfehlenswert, diese zusammen mit der Itaconsäure vorzulegen. Sie können aber selbstverständlich auch später zugetropft werden. Nach dem Zulauf aller Monomere kann sich auch noch eine Nachreaktionszeit, beispielsweise von 0,5 bis 3 h anschließen. Hierdurch wird sichergestellt, dass die Polymerisationsreaktion so vollständig wie möglich verläuft.

Der Fachmann kann die Polymerisation aber selbstverständlich auch auf andere Art und Weise vornehmen.

Die synthetisierten Polymere können aus der wässrigen Lösung mittels üblicher, dem Fachmann bekannter Methoden isoliert werden, beispielsweise durch Eindampfen der Lösung, Sprühtrocknen, Gefriertrocknen oder Fällung.

Besonders bevorzugt werden die Polymere nach der Polymerisation aber überhaupt nicht aus der wässrigen Lösung isoliert, sondern die Polymerlösungen werden als solche für die erfindungsgemäße Zubereitung verwendet und ggf. verdünnt.

Das Molekulargewicht $M_w$ (Gewichtsmittel) der erfindungsgemäß eingesetzten Itaconsäure Homo- oder Copolymere beträgt 5.000 bis 2.000.000 g/mol, bevorzugt mindestens 10.000g/mol, besonders bevorzugt mindestens 15.000 g/mol. Im Regelfalle beträgt $M_w$ 15.000 g/mol bis 200.000 g/mol, bevorzugt 20.000 g/mol bis 100.000 g/mol, besonders bevorzugt 30.000 g/mol bis 80.000 g/mol. Es wird vom Fachmann je nach dem gewünschten Verwendungszweck festgelegt.

Komponente (B) der erfindungsgemäßen Zubereitung ist Wasser oder ein anderes Lösungsmittel, das geeignet ist, das Itaconsäure Homo- oder Copolymer (Komponente A) zu lösen oder zu dispergieren, zu suspendieren oder zu

emulgieren. Unter einem Lösungsmittel wird im Rahmen des vorliegenden Textes eine flüssige Matrix verstanden, in welcher die verschiedenen Inhaltsstoffe der erfindungsgemäßen Zubereitung möglichst fein verteilt vorliegen. Eine derartig feine Verteilung kann beispielsweise im Sinne einer molekulardispersen Verteilung eine echte Lösung der Inhaltsstoffe im Lösungsmittel sein. Der Begriff "Lösungsmittel" umfasst jedoch auch flüssige Matrizen, in denen die Inhaltsstoffe im Sinne einer Emulsion oder Dispersion verteilt sind, d.h. keine molekulardisperse Lösung bilden. Bevorzugt ist eine klare Lösung sowie Wasser als Lösemittel.

Als Lösungsmittel eignen sich beispielsweise Wasser sowie wassermischbare und nicht mit Wasser mischbare Lösemittel. Geeignete wassermischbare Lösungsmittel sind beispielsweise primäre oder sekundäre Mono- oder Polyalkohole mit 1 bis etwa 6 C-Atomen wie Methanol, Ethanol, Propanol, Isopropanol, n-Butanol, Iso-Butanol, Pentanol, Hexanol, Cyclohexanol oder Glycerin. Ebenfalls als wassermischbare Lösemittel geeignet sind niedermolekulare Ketone wie Aceton oder Methyl-Ethyl-Keton oder Etheralkohole wie Diethylenglykol oder Triethylglykol. Ebenfalls im Rahmen der vorliegenden Erfindung geeignet sind Lösungsmittel, die nicht oder nur in geringem Maße mit Wasser mischbar sind. Hierzu zählen beispielsweise Ether wie Diethylether, Dioxan oder Tetrahydrofuran, sowie gegebenenfalls substituierte aliphatische Lösemittel worunter beispielsweise die höheren Homologen der oben genannten Alkohole und Ketone sowie Paraffinkohlenwasserstoffe fallen.

Die oben genannten Lösungsmittel können einzeln oder als Gemisch aus zwei oder mehr der genannten Lösungsmittel eingesetzt werden. Im Rahmen einer bevorzugten Ausführungsform der vorliegenden Erfindung wird als Lösungsmittel Wasser, gegebenenfalls im Gemisch mit einem oder mehreren der oben genannten, vorzugsweise wasserlöslichen Lösungsmittel, eingesetzt. Wenn im Rahmen der vorliegenden Erfindung ein Lösungsmittel eingesetzt werden soll, das Wasser und ein nicht mit Wasser mischbares Lösungsmittel enthält, so kann das Lösungsmittel beispielsweise einen Emulgator enthalten um eine im wesentlichen stabile W/O- oder eine O/W-Emulsion zu ermöglichen. Bevorzugt ist eine rein wässrige Lösung.

Wenn die erfindungsgemäße Zubereitung ein Gemisch aus Wasser und einem weiteren, wassermischbaren Lösungsmittel enthält, so beträgt der Anteil an Wasser an einem solchen Gemisch vorzugsweise mindestens etwa 30 Gew.% oder mehr, beispielsweise mindestens etwa 40 oder mindestens etwa 50 Gew.%. Im Rahmen einer besonders bevorzugten Ausführungsform der vorliegenden Erfindung beträgt der Wasseranteil mindestens etwa 75 Gew.-%. Geeignete Kombinationen von Wasser und wassermischbaren Lösungsmitteln sind beispielsweise Wasser/Methanol, Wasser/Ethanol, Wasser/Propanol oder Wasser/Isopropanol. Bevorzugt ist im Rahmen der vorliegenden Erfindung ein Gemisch aus Wasser und Ethanol, wobei der Wasseranteil vorzugsweise größer als etwa 75 Gew.-%, beispielsweise größer als etwa 80 oder etwa 85 Gew.-%, ist.

Im Rahmen einer bevorzugten Ausführungsform der vorliegenden Erfindung enthält die erfindungsgemäße Zubereitung mindestens ein Lösungsmittel, das einen Wasseranteil von mindestens etwa 50 Gew.-% aufweist. Besonders bevorzugt wird ausschließlich Wasser als Lösungsmittel eingesetzt.

Bei dem in der erfindungsgemäßen Zubereitung eingesetzten mindestens einen aminhaltigen /oder amidhaltigen Alkohol, handelt es sich bevorzugt um ein oder mehrere Alkanolamine, Alkanolamide und/oder hyperverzweigte_Polyetheraminpolyole.

Geeignete aminhaltige Alkohole sind primäre, sekundäre oder tertiäre Alkylaminverbindungen deren Alkylrest mindestens eine, vorzugsweise mehrere, Hydroxylgruppen aufweist. Die hydroxylgruppenhaltigen Alkylaminverbindungen können gleiche oder verschiedene lineare oder cyclische Alkylreste mit 1 bis 8, vorzugsweise 1 bis 6, Kohlenstoffatomen aufweisen. Besonders bevorzugt sind Mono-, Di- oder Tri-$C_1$-$C_6$-Alkanolamine wie beispielsweise Triethanolamin, Tripropanolamin, Triisopropanolamin, Tributanolamin, Diethanolamin, Dipropanolamin, Diisopropanolamin, Dibutanolamin und/oder Monoethanolamin. Darunter ist Triethanolamin besonders bevorzugt. Weiterhin bevorzugte aminhaltige Alkohole sind primäre, sekundäre oder tertiäre Amine von Zuckeralkoholen wie beispielsweise Mannit (Mannitol), Isomalt, Lactit, Sorbit (Sorbitol oder Glucitol) und Xylit (Xylitol), Threit, Erythrit und Arabit, wobei die Reste $R^1$ und $R^2$ der an den Zuckerrest gebundenen Aminogruppe $NR^1R^2$ gleich oder verschieden sind und für H, $C_1$-$C_4$-Alkyl, insbesondere Methyl und/oder Ethyl, stehen.

Als geeignete Vertreter dieser Art seien beispielhaft N-Methylglucamin, N,N-Dimethylglucamin, N-Ethylglucamin etc. genannt. Geeignete amidhaltige Alkohole sind primäre, sekundäre oder tertiäre Alkylamidverbindungen deren Alkylrest mindestens eine, vorzugsweise mehrere, Hydroxylgruppen aufweist. Die hydroxylgruppenhaltigen Alkylamidverbindungen können gleiche oder verschiedene lineare oder cyclische Alkylreste mit 1 bis 8, vorzugsweise 1 bis 6, Kohlenstoffatomen aufweisen.

Besonders bevorzugt sind Alkanolamide, beispielsweise Mono-, Di- oder Tri-$C_1$-$C_6$-alkanolamide. Weiterhin bevorzugte aminhaltige Alkohole sind primäre, sekundäre oder tertiäre Amine von Zuckeralkoholen wie beispielsweise Mannit (Mannitol), Isomalt, Lactit, Sorbit (Sorbitol oder Glucitol) und Xylit (Xylitol), Threit, Erythrit und Arabit, wobei die Reste $R^1$ und $R^2$ der an den Zuckerrest gebundenen Aminogruppe $NR^1R^2$ gleich oder verschieden sind und für H, $C_1$-$C_4$-Alkyl, insbesondere Methyl und/oder Ethyl, stehen.

Als geeignete Vertreter dieser Art seien beispielsweise Gluconamide genannt.

Gemäß einer bevorzugten Ausführungsform enthält die erfindungsgemäße Zubereitung als aminhaltigen Alkohol (C) mindestens ein hochfunktionelles hyperverzweigtes Polyetheraminpolyol.

Unter einem hochfunktionellen hyperverzweigten Polyetheraminpolyol ist ein Produkt zu verstehen, das neben den Ethergruppen und den Aminogruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die erfindungsgemäß eingesetzten hochfunktionellen Polyetheramin-polyole weisen zumeist nicht mehr als 500 end- oder seitenständige funktionelle Gruppen, bevorzugt nicht mehr als 100 end- oder seitenständige funktionelle Gruppen auf. Das Merkmal "hyperverzweigt" bedeutet erfindungsgemäß, dass der Verzweigungsgrad (DB = degree of branching) der betreffenden Stoffe, der definiert ist als

$$DB(\%) = \frac{T+Z}{T+Z+L} \times 100,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten,
10 bis 95 %, bevorzugt 25 bis 90 % und besonders bevorzugt 30 bis 80 % beträgt.

Durch den so definierten Verzweigungsgrad unterscheiden sich die nicht-dendrimeren hyperverzweigten Polymere von den dendrimeren Polymeren. "Dendrimer" sind die Polymere dann, wenn ihr Verzweigungsgrad DB = 99 bis 100 % beträgt. Damit weist ein Dendrimer die maximal mögliche Anzahl an Verzweigungsstellen auf, welche nur durch einen hochsymmetrischen Aufbau erreicht werden kann. Zur Definition des "degree of branching" siehe auch H. Frey et al., Acta Polym. 1997, 48, 30.

Unter hyperverzweigten Polymeren werden im Rahmen dieser Erfindung also im Wesentlichen unvernetzte Makromoleküle verstanden, die strukturell uneinheitlich sind. Sie können, ausgehend von einem Zentralmolekül, analog zu Dendrimeren, jedoch mit uneinheitlicher Kettenlänge der Äste aufgebaut sein. Sie können aber auch linear mit funktionellen seitenständigen Ästen aufgebaut sein oder lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499. Weitere Angaben zu hyperverzweigten Polymeren und deren Synthese sind beispielsweise in J.M.S. - Rev. Macromol. Chem. Phys., C37(3), 555 - 579 (1997) und der dort zitierten Literatur zu finden.

Polyetheraminpolyole als solche sind bekannt. Die Herstellung dieser Polymere wird zum Beispiel in US 2,178,173, US 2,290,415, US 2,407,895 und DE 40 03 243 beschrieben.

Die Herstellung der erfindungsgemäß eingesetzten hochfunktionellen hyperverzweigten Polyetheraminpolyole wird insbesondere in WO 09/047269 beschrieben

Die nach dem in WO 2009/047269 A2 beschriebenen Verfahren gebildeten hochfunktionellen hochverzweigten Polyetheraminpolyole sind nach der Reaktion, also ohne weitere Modifikation, mit Hydroxylgruppen terminiert.

Die OH-Zahl der erfindungsgemäß eingesetzten Polyetheraminpolyole beträgt meist 100 mg KOH/g oder mehr, bevorzugt 150 mg KOH/g oder mehr.

Das gewichtsmittlere Molgewicht $M_w$ der erfindungsgemäß eingesetzten Polyetheraminpolyole liegt zumeist zwischen 1.000 und 500.000, bevorzugt von 2000 bis 300.000 g/mol, das zahlenmittlere Molgewicht $M_n$ zwischen 500 und 50.000, bevorzugt zwischen 1.000 und 40.000 g/mol, gemessen mittels Gelpermeationschromatographie mit Hexafluorisopropanol als mobiler Phase und Polymethylmethacrylat (PMMA) als Standard.

Die erfindungsgemäß eingesetzten hochfunktionellen hoch- oder hyperverzweigten Polyetheraminpolyole weisen in der Regel eine Glasübergangstemperatur von weniger als 50 °C, bevorzugt weniger als 30 und besonders bevorzugt weniger als 10 °C auf.

Die erfindungsgemäße Zubereitung ist sauer. Sie weist im Allgemeinen einen pH-Wert von 0,5 bis 6 auf, wobei je nach Substrat und Applikationsart sowie Einwirkungsdauer der Zubereitung auf die Oberfläche engere pH-Bereiche gewählt sein können. Beispielsweise stellt man den pH-Wert zur Behandlung von Aluminiumoberflächen vorzugsweise auf den Bereich von 2 bis 4 und bei Behandlung von Zink oder verzinktem Stahl vorzugsweise auf den Bereich von 1 bis 5 ein.

Der pH-Wert der Zubereitung kann einerseits durch die Art und Konzentration der COOH-Gruppen aufweisenden Polymere oder Copolymere gesteuert werden und ergibt sich somit automatisch. Hierbei ist zu beachten, dass die COOH-Gruppen im Polymer herstellungsbedingt ganz oder teilweise neutralisiert sein können.

Die Zubereitung kann aber optional auch noch mindestens eine anorganische oder organische Säure und/oder

ihre entsprechenden Salze (D) umfassen. Beispiele geeigneter Säuren (D) umfassen phosphor-, schwefel- oder stickstoffhaltige Säuren wie Phosphorsäure, Phosphonsäure, Schwefelsäure, Sulfonsäuren wie Methansulfonsäure, Amidosulfonsäure, p-Toluolsulfonsäure, m-Nitrobenzolsulfonsäure und Derivaten davon, Salpetersäure, Salzsäure, Ameisensäure, Oxalsäure, Milchsäure oder Essigsäure, sowie deren entsprechende Alkali-, Erdalkali, Übergangsmetall (insbesondere Zn, Zr, Ti) oder Ammoniumsalze. Bevorzugt wird die Säure ausgewählt aus der Gruppe bestehend aus $HNO_3$, $H_2SO_4$, $H_3PO_4$, Ameisensäure, Essigsäure, Oxalsäure, Milchsäure. Besonders bevorzugt sind $H_3PO_4$ und/oder $HNO_3$. Ganz besonders bevorzugt sind $H_3PO_4$ und deren Salze. Selbstverständlich können auch Gemische verschiedener Säuren eingesetzt werden.

Beispiele für Phosphonsäuren umfassen 1-Hydroxyethan-1,1-diphosphonsäure (HEDP), 2-Phosphonobutan-1,2,4-tricarbonsäure (PBTC), Aminotri(methylenphosphonsäure) (ATMP), Ethylendiamintetra(methylenphosphonsäure) (EDTMP) oder Diethylentriaminpenta(methylenphosphonsäure) (DTPMP).

Die Art und Konzentration der Säure (D) in der Zubereitung wird vom Fachmann je nach dem gewünschten Anwendungszweck und pH-Wert bestimmt. Im Allgemeinen bewährt hat sich eine Konzentration von 0,01 g/l bis 30 g/l, bevorzugt 0,05 g/l bis 20 g/l, und besonders bevorzugt 0,1 g/l bis 10 g/l.

Die erfindungsgemäße Zubereitung kann neben den genannten Komponenten (A) bis (D) noch optional weitere Komponenten (E) umfassen.

Bei den optional vorhandenen Komponenten (E) kann es sich beispielsweise um Übergangsmetallionen und -verbindungen, beispielsweise des Ce, Ni, Co, V, Fe, Zn, Zr, Mn, Mo, W, Ti, Zr, Hf, Bi, und/oder der Lanthaniden handeln. Es kann sich auch um Verbindungen von Hauptgruppenelementen handeln, wie beispielsweise Si, Ca, Mg und/oder Al. Die Verbindungen können beispielsweise in Form von Salzen oder in Form der jeweiligen Aqua-Komplexe eingesetzt werden. Es kann sich aber auch um Komplexe mit anderen Liganden handeln, wie beispielsweise Oxometallate wie beispielsweise $MoO_4^{2-}$ oder $WO_4^{2-}$, Lactate oder Oxalate. Weiterhin können auch Komplexe mit typischen chelatbildenden Liganden wie Ethylendiamintetraessigsäure (EDTA), Diethylentriaminpentaessigsäure (DTPA), Hydroxyethylethylendiamintriessigsäure (HEDTA), Nitrilotriessigsäure (NTA) oder Methylglycindiessigsäure (MGDA) eingesetzt werden.

Weitere optionale Komponenten (E) umfassen oberflächenaktive Verbindungen, Korrosionsinhibitoren oder typische Galvanohilfsmittel. Der Fachmann trifft unter den prinzipiell möglichen optionalen Komponenten sowie hinsichtlich ihrer Mengen je nach der gewünschten Anwendung eine entsprechende Auswahl. Beispiele besonders bevorzugter Korrosionsinhibitoren, welche in Kombination mit den Itaconsäurepolymeren eingesetzt werden können, umfassen Benztriazol- und/oder Tolyltriazol.

Die Zubereitung kann zur Feinsteuerung der Eigenschaften auch noch weitere wasserlösliche Polymere als zusätzliche Komponenten umfassen. Beispiele derartiger Polymerer umfassen insbesondere Carboxylatgruppen umfassende Polymere, welche lediglich der obigen Definition der Zusammensetzung des Polymers (A) nicht entsprechen. Als Beispiele seien Poly(meth)acrylsäuren genannt sowie Copolymere aus (Meth)acrylsäure mit anderen Säuregruppen aufweisenden Monomeren wie beispielsweise Maleinsäure, Fumarsäure, Crotonsäure oder Vinylessigsäure. Die Menge derartiger zusätzlicher (Co)polymerer wird vom Fachmann je nach den gewünschten Eigenschaften der Passivierungsschicht bestimmt. Sie sollte aber im Regelfall 30 Gew.-%, bevorzugt 20 Gew.-% und besonders bevorzugt 10 Gew.-% bezüglich der Menge aller eingesetzten Polymere nicht überschreiten.

Bevorzugt handelt es sich bei der Passivierung um eine im Wesentlichen chromfreie Passivierung. Dies soll bedeuten, dass allenfalls geringe Mengen von Chromverbindungen zur Feinsteuerung der Eigenschaften der Passivierungsschicht zugegeben werden könnten. Die Menge sollte 2 Gew.-%, bevorzugt 1 Gew.-% und besonders bevorzugt 0,5 Gew.-% Chrom bezüglich aller Bestandteile der erfindungsgemäßen Zubereitung nicht überschreiten. Falls Chrom-Verbindungen eingesetzt werden sollen, sollten bevorzugt Cr(III)-Verbindungen eingesetzt werden. Der Cr(VI)-Gehalt soll aber in jedem Falle so gering gehalten werden, dass der Cr(VI)-Gehalt auf dem passivierten Metall 1 $mg/m^2$ nicht überschreitet.

Besonders bevorzugt handelt es sich um eine chromfreie Passivierung, d.h. die eingesetzte Zubereitung enthält keinerlei Cr-Verbindungen. Der Begriff "chromfrei" schließt aber nicht aus, dass indirekt und an sich unbeabsichtigt geringe Mengen Chrom in das Verfahren eingeschleppt werden. Sofern nämlich mittels der erfindungsgemäßen Zubereitung Legierungen passiviert werden, welche Chrom als Legierungsbestandteil umfassen, beispielsweise Cr-haltiger Stahl, ist es immer im Bereich des Möglichen, dass geringe Mengen Chrom im zu behandelnden Metall durch die für das Verfahren eingesetzte Zubereitung gelöst werden und dementsprechend an sich unbeabsichtigt in die Zubereitung gelangen können. Auch beim Einsatz derartiger Metalle und den daraus resultierenden Konsequenzen soll das Verfahren als "chromfrei" angesehen werden. Besonders bevorzugt handelt es sich außerdem um eine fluorfreie Passivierung.

Die Konzentration der Polymere (A) in der erfindungsgemäßen Zubereitung wird vom Fachmann je nach dem gewünschten Anwendungszweck bestimmt. Beispielsweise hängt die Dicke der Passivierungsschicht von der gewählten Verfahrenstechnik ab, sie kann aber auch von der Viskosität der zum Passivieren eingesetzten Zubereitung abhängen. Im Allgemeinen bewährt hat sich eine Konzentration von 0,01 g/l bis 500 g/l, bevorzugt 0,5 g/l bis 200 g/l, und besonders bevorzugt 10 g/l bis 150 g/l. Die angegebenen Konzentrationen beziehen sich auf die einsatzfertige Zubereitung.

Die Konzentration des stickstoffhaltigen Alkohols (C) in der erfindungsgemäßen Zubereitung ist abhängig von

der Konzentration des Itaconsäure Homo- oder Copolymers (A) und beträgt im Allgemeinen 0,5 bis 30 Gew-%, bevorzugt 1 bis 20 Gew-%, besonders bevorzugt 1 bis 15 Gew%, bezogen auf das Itaconsäure Homo- oder Copolymer (A).

Die Menge an Wasser oder einem anderen Lösungsmittel (B) ist abhängig davon, ob die erfindungsgemäße Zubereitung eine einsatzfertige Zubereitung oder ein Konzentrat ist, sowie vom jeweiligen Einsatzzweck. Grundsätzlich ergibt sich die Menge aus den für die einsatzfertige angegebenen Konzentrationen der einzelnen Komponenten.

Gemäß einer bevorzugten Ausführungsform enthalten erfindungsgemäße saure, wässrige Zubereitungen 1 bis 20 Gew.-% Itaconsäure Homo- oder Copolymer (A), 0,1 bis 2 Gew.-% des stickstoffhaltigen Alkohols (C), sowie gegebenenfalls 0,1 bis 2 Gew.-% einer Säure (D), jeweils bezogen auf den Feststoff.

Die vorgenannte Ausführungsform ist mit anderen Ausgestaltungen kombinierbar.

Bevorzugt sind entsprechende erfindungsgemäße saure, wässrige Zubereitungen enthaltend als Komponente (A) Copolymere aus Itaconsäure und Acrylsäure, bevorzugt 35 bis 65 Gew.-% Itaconsäure und 35 bis 65 Gew.-% Acrylsäure, und als Komponente (C) mindestens einen amin- oder amidhaltigen Alkohol, insbesondere Mono-, Di- und Tri-$C_1$-$C_6$-alkanolamine und/oder -amide, primäre, sekundäre oder tertiäre Amine und/oder Amide von Zuckeralkoholen und/oder hyperverzweigte, hochfunktionelle Polyetheraminpolyole, wobei Zubereitungen enthaltend als Komponente (A) Copolymere (A) aus (a1) 0,1 bis 50 Gew.-% Itaconsäure, und (a2) 50 bis 99,9 Gew.-% (Meth)acrylsäure und als Komponente (C) Mono-, Di- und/oder Triethanolamin ausgenommen sind.

Weiterhin bevorzugt sind entsprechende erfindungsgemäße saure, wässrige Zubereitungen enthaltend als Komponente (A) Terpolymere aus Itaconsäure, Acrylsäure und Vinylphosphonsäure, bevorzugt aus 20 bis 50 Gew.-% Itaconsäure, 30 bis 50 Gew.-% Acrylsäureund 1 bis 30 Gew.-% Vinylphosphonsäure und als Komponente (C) mindestens einen amin- oder amidhaltigen Alkohol, insbesondere Mono-, Di- und Tri-$C_1$-$C_6$-alkanolamine und/oder -amide, primäre, sekundäre oder tertiäre Amine und/oder Amide von Zuckeralkoholen und/oder hyperverzweigte, hochfunktionelle Polyetheraminpolyole.

Besonders bevorzugt sind vorgenannte erfindungsgemäße Zubereitungen, in welchen die Komponente (C) ausgewählt ist aus der Gruppe enthaltend Triethanolamin, Tripropanolamin, Triisopropanolamin, Tributanolamin, Diethanolamin, Dipropanolamin, Diisopropanolamin, Dibutanolamin, Monoethanolamin, N-Methylglucamin N,N-Di-methylglucamin, N-Ethylglucamin, Gluconamid und hyperverzweigtes, hochfunktionelles Polyetheraminpolyol. Darunter ganz besonders bevorzugt sind Triethanolamin, N-Methylglucamin, Gluconamid und/oder hyperverzweigtes, hochfunktionelles Polyetheraminpolyol.

Die erfindungsgemäßen Zubereitungen können in allen Anwendungen zur Passivierung von metallischen Oberflächen sowie zur Ausbildung von Passivierungsschichten auf Metallen eingesetzt werden. Es wird dabei auf die einleitende Definition des Begriffes "Passivierungsschicht" Bezug genommen. Die erfindungsgemäßen Zubereitungen eignen sich insbesondere für die chromfreie Passivierung.

Es können beliebige metallische Oberflächen mittels der erfindungsgemäßen Polymere behandelt, insbesondere passiviert werden. Bevorzugt handelt es sich aber um Oberflächen aus Zn, Zn-Legierungen, Al oder Al-Legierungen. Es kann sich dabei um die Oberflächen von vollständig aus den besagten Metallen bzw. Legierungen bestehenden Körpern beziehungsweise Werkstücken handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann. Insbesondere kann es sich um die Oberfläche von verzinktem Eisen oder Stahl handeln. In einer besonderen Ausführungsform des Verfahrens handelt es sich um die Oberfläche eines Bandmetalls, insbesondere um elektrolytisch verzinkten oder heißverzinkten Stahl. Die Passivierung von Stückgut (Trommelware, Gestellware etc.) ist ebenfalls Bestandteil des erfindungsgemäßen Verfahrens.

Zn- oder Al-Legierungen sind dem Fachmann bekannt. Je nach dem gewünschten Anwendungszweck wählt der Fachmann Art und Menge von Legierungsbestandteilen aus. Typische Bestandteile von Zink-Legierungen für Schmelztauchverfahren umfassen insbesondere Al, Pb, Si, Mg, Sn, Cu oder Cd. Typische Legierungskomponenten in Zn-Legierungen, die elektrolytisch abgeschieden werden, sind Ni, Fe, Co und Mn. Typische Bestandteile von Aluminium-Legierungen umfassen insbesondere Mg, Mn, Si, Zn, Cr, Zr, Cu oder Ti. Es kann sich auch um Zn/Mg oder Al/Zn-Legierungen handeln, bei denen Zn und Mg bzw. Al und Zn in annähernd gleicher Menge vorhanden sind. Mit derartigen Legierungen beschichteter Stahl ist kommerziell erhältlich.

Bei dem erfindungsgemäßen Verfahren zum Passivieren metallischer Oberflächen wird die Oberfläche des Metalls mit der erfindungsgemäßen Zubereitung behandelt, beispielsweise durch Sprühen, Tauchen oder Aufwalzen. Nach einem Tauchprozess kann man zum Entfernen überschüssiger Behandlungslösung das Werkstück abtropfen lassen; bei Blechen, Metallfolien oder dergleichen lässt sich überschüssige Behandlungslösung aber beispielsweise auch abquetschen oder abrakeln. Bei der Behandlung werden zumindest Teile des eingesetzten Polymers sowie weitere Komponenten der Zubereitung von der Oberfläche des Metalls chemisorbiert, so dass eine feste Bindung zwischen Oberfläche und den Komponenten zustande kommt. Die Behandlung mit der erfindungsgemäßen Zubereitung erfolgt im Regelfalle bei Raumtemperatur oder Temperaturen oberhalb Raumtemperatur ohne dass damit niedrigere Temperaturen prinzipiell ausgeschlossen werden sollen. Im Regelfalle erfolgt die Behandlung bei 20 bis 90°C, bevorzugt 20

bis 80°C und besonders bevorzugt 20 bis 60°C. Hierzu kann das Bad mit der erfindungsgemäßen Zubereitung geheizt werden, eine erhöhte Temperatur kann sich aber auch automatisch einstellen, indem man warmes Metall in das Bad eintaucht.

Es ist möglich, die Oberfläche nach der Behandlung mit einer Reinigungsflüssigkeit, insbesondere mit Wasser, nachzuspülen, um Reste der erfindungsgemäßen Zubereitung von der Oberfläche zu entfernen.

Es kann sich bei der Behandlung aber auch um einen sogenannten "No-rinse" Prozess handeln, bei dem die erfindungsgemäßen Zubereitung unmittelbar nach dem Aufbringen ohne Abspülen direkt in einem Trockenofen eingetrocknet wird.

Die Behandlung der Metalloberfläche mit der erfindungsgemäßen Zubereitung und/oder dem gegebenenfalls eingesetzten Vernetzer kann diskontinuierlich oder bevorzugt kontinuierlich erfolgen. Ein kontinuierliches Verfahren eignet sich insbesondere zum Behandeln von Bandmetallen, dem sogenannten "coil-coating". Das Metallband wird hierbei durch eine Wanne oder eine Sprühvorrichtung mit der erfindungsgemäßen Zubereitung sowie optional durch weitere Vor- oder Nachbehandlungsstationen gefahren.

Die Behandlungsdauer wird vom Fachmann je nach den gewünschten Eigenschaften der Schicht, der jeweiligen erfindungsgemäßen Zubereitung und den technischen Rahmenbedingungen festgelegt. Sie kann deutlich weniger als eine Sekunde oder mehrere Minuten betragen. Beim kontinuierlichen Verfahren hat es sich besonders bewährt, die Oberfläche mit der erfindungsgemäßen Zubereitung für eine Dauer von 1 bis 60 s in Kontakt zu bringen.

Nach der Behandlung wird das eingesetzte Lösemittel entfernt. Die Entfernung kann bei Raumtemperatur durch einfaches Verdampfen an Luft bei Raumtemperatur erfolgen.

Das Entfernen des Lösemittels kann aber auch durch geeignete Hilfsmittel unterstützt werden, beispielsweise durch Erwärmung und/oder durch Überleiten von Gasströmen, insbesondere Luftströmen. Das Abdampfen des Lösemittels kann beispielsweise durch IR-Strahler unterstützt werden, oder auch beispielsweise durch Trocknen in einem Trockenkanal. Bewährt hat sich zum Trocknen eine Temperatur von 30°C bis 180°C, bevorzugt 40°C bis 100°C und besonders bevorzugt 40°C bis 80°C. Gemeint ist hiermit die Temperatur auf der Metalloberfläche (peak metal temperature), die Trocknertemperatur muss gegebenenfalls höher eingestellt werden und wird vom Fachmann entsprechend gewählt.

Das erfindungsgemäße Verfahren kann optional einen oder mehrere Vorbehandlungsschritte umfassen. Beispielsweise kann die metallische Oberfläche vor dem Passivieren gereinigt werden, z.B. um Fette oder Öle zu entfernen. Weiterhin kann sie vor dem Passivieren auch gebeizt werden, um oxidische Beläge, Zunder, einen temporären Korrosionsschutz und dergleichen zu entfernen. Weiterhin muss die Oberfläche nach und zwischen derartigen Vorbehandlungsschritten auch gegebenenfalls mit Wasser gespült werden, und die Reste von Spüllösungen oder Beizlösungen zu entfernen.

Die Passivierungsschicht kann zusätzlich vernetzt werden. Hierzu kann beispielsweise der erfindungsgemäßen Zubereitung ein Vernetzer beigemischt werden, vorausgesetzt, er reagiert nicht bereits in der Zubereitung. Es kann aber auch zunächst das Metall mit der erfindungsgemäßen Zubereitung behandelt werden und danach die Schicht mit einem geeigneten Vernetzer behandelt werden, beispielsweise mit der Lösung eines Vernetzers besprüht werden.

Geeignete Vernetzer sollten wasserlöslich oder zumindest in dem besagten wässrigen Lösemittelgemisch löslich sein. Beispiele geeigneter Vernetzer umfassen insbesondere solche, die mindestens 2 vernetzende Gruppen, ausgewählt aus der Gruppe von Aziran-, Oxiran- oder Thiirangruppen aufweisen. Nähere Einzelheiten zu geeigneten Vernetzern sind in der Druckschrift WO 2005/042801 A1 offenbart, auf die an dieser Stelle ausdrücklich verwiesen wird.

Mittels des erfindungsgemäßen Verfahrens ist eine Passivierungsschicht auf einer metallischen Oberfläche erhältlich, die ebenfalls Gegenstand der Erfindung ist. Die genaue Struktur und Zusammensetzung der Passivierungsschicht ist nicht bekannt. Sie umfasst aber neben den üblichen amorphen Oxiden des Aluminiums oder Zinks sowie ggf. weiterer Metalle auch die Reaktionsprodukte des Polymers sowie gegebenenfalls des Vernetzers und/oder weiterer Komponenten der erfindungsgemäßen Zubereitung. Die Zusammensetzung der Passivierungsschicht ist im Allgemeinen nicht homogen, sondern die Komponenten scheinen Konzentrationsgradienten aufzuweisen.

Die Dicke der erfindungsgemäßen Passivierungsschicht wird vom Fachmann je nach den gewünschten Eigenschaften der Schicht eingestellt. Im Regelfalle beträgt die Dicke 0,01 bis 3 $\mu$m, bevorzugt 0,02 bis 1 $\mu$m, und besonders bevorzugt 0,03 bis 0,2 $\mu$m. Die Dicke lässt sich beispielsweise über die Art und Menge der aufgetragenen Komponenten sowie die Einwirkzeit beeinflussen. Weiterhin lässt sie sich durch verfahrenstechnische Parameter beeinflussen, beispielsweise durch Abrakeln oder Abwalzen zu viel aufgebrachter Behandlungslösung.

Die Dicke der Schicht wird dabei durch Differenzwägung vor und nach Einwirkung der erfindungsgemäßen Zubereitung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist.

Ein weiterer Gegenstand der vorliegenden Anmeldung ist eine metallische Oberfläche, welche die erfindungsgemäße Passivierungsschicht umfasst. Die Passivierungsschicht ist unmittelbar auf der eigentlichen Metalloberfläche aufgebracht. In einer bevorzugten Ausführungsform handelt es sich um ein Bandmetall aus Stahl, welches eine Beschichtung aus Zn oder einer Zn-Legierung umfasst, und auf der eine erfindungsgemäße Passivierungsschicht bzw. Vorbehandlungsschicht aufgebracht ist.

Die erfindungsgemäße metallische Oberfläche mit Passivierungsschicht kann in prinzipiell bekannter Art und Weise mit einer oder mehreren Lackschichten (Primer, Decklack) überlackiert werden. Typische Lacke, deren Zusammensetzung sowie typische Schichtfolgen bei mehreren Lackschichten sind dem Fachmann prinzipiell bekannt.

Die erfindungsgemäße Zubereitung kann auf verschiedenen Verarbeitungsstufen eingesetzt werden. Sie kann beispielsweise bei einem Stahlhersteller vorgenommen werden. Hierbei kann ein Stahlband in einem kontinuierlichen Verfahren verzinkt und unmittelbar nach der Verzinkung durch Behandeln mit der erfindungsgemäßen Zubereitung passiviert werden. Eine Passivierung in diesem Stadium wird vom Fachmann häufig auch als "Nachbehandlung" ("post-treatment") bezeichnet.

Hierbei kann es sich nur um eine temporäre Passivierung handeln, die zum Korrosionsschutz bei der Lagerung und beim Transport und/oder bei weiteren Verfahrensschritten dient, aber vor dem Aufbringen des permanenten Korrosionsschutzes wieder entfernt wird. Die sauren Polymere lassen sich durch eine Reinigung mit wässrigen alkalischen Lösungen wieder von der Oberfläche entfernen.

Es kann sich aber auch um eine permanente Korrosionsschutzbehandlung handeln, die auf dem Band oder dem fertig ausgeformten Werkstück verbleibt und mit zusätzlichen Lackschichten versehen wird. Eine Passivierung in diesem Stadium wird vom Fachmann häufig auch als "Vorbehandlung" ("pre-treatment") bezeichnet.

Mittels der erfindungsgemäßen Zubereitung wird ein deutlich besserer Korrosionsschutz erreicht, insbesondere beim "pre-treatment" als bei Verwendung von entsprechenden Zubereitungen gemäß dem Stand der Technik.

Die folgenden Beispiele sollen die Erfindung näher illustrieren:

Messmethoden:

Die K-Werte wurden nach nach H. Fikentscher, Cellulose-Chemie, Bd. 13, Seiten 58 bis 64 und 71 bis 74 (1932) in 1 gew.-%iger wässriger Lösung bei 25°C bei pH-Wert 7 gemessen.

Die Polyetheraminpolyole wurden per Gelpermeationschromatographie mit einem Refraktometer als Detektor analysiert. Als mobile Phase wurde Hexafluorisopropanol (HFIP) verwendet, als Standard zur Bestimmung des Molekulargewichts wurde Polymethylmethacrylat (PMMA) eingesetzt.
Die Bestimmung der OH-Zahl erfolgte nach DIN 53240, Teil 2.

Herstellung von erfindungsgemäß eingesetzten hyperverzweigten Polyetheraminpolyolen (C)

(C.1) In einem Vierhalskolben, ausgestattet mit Rührer, Destillationsbrücke, Gaseinleitrohr und Innenthermometer, wurden 2000 g Triethanolamin (TEA) sowie 13,5 g unterphosphorige Säure als 50%ige wässrige Lösung, vorgelegt und das Gemisch auf 230 °C erwärmt. Bei ca. 220 °C setzte langsam die Bildung von Kondensat ein. Das Reaktionsgemisch wurde bei 230 °C über 4 h gerührt, wobei das bei der Reaktion entstandene Kondensat mittels mäßigen $N_2$-Stroms als Strippgas über die Destillationsbrücke entfernt wurde. Gegen Ende der angegebenen Reaktionszeit wurde bei einem Unterdruck von 500 mbar restliches Kondensat entfernt. Nach Erreichen des gewünschten Umsatzgrades wurde der Ansatz auf 140 °C abgekühlt und der Druck langsam und stufenweise auf 100 mbar verringert um noch verbliebene flüchtigen Anteile zu entfernen. Das Produktgemisch wurde anschließend auf Raumtemperatur abgekühlt.
Mw: 6500, Mn: 3800, OH- Zahl Produkt (mg KOH/g) nach DIN 53240, Teil 2: 512

Herstellung von erfindungsgemäß eingesetzten Polymeren (A)

(A.1) Terpolymer aus Acrylsäure, Itaconsäure und Vinylphosphonsäure

In einem 6 l-Reaktorgefäß, das mit Ankerrührer, Temperaturkontrolle, Stickstoffeinleitung und 2 Zulaufstellen versehen ist, werden 85,3 g Vinylphosphonsäure (95%ig), 292,7 g Itaconsäure und 531,3 g entionisiertes Wasser vorgelegt. Die Vorlage wird 15 Minuten mit Stickstoff begast und unter Stickstoffatmosphäre auf 98 °C erhitzt. Anschließend werden innerhalb von 5h 324,3 g Acrylsäure in 324,3 g entionisiertem Wasser und innerhalb von 6 h 41,9 g Natriumperoxodisulfat in 250 g entionisiertem Wasser zugegeben. Danach wird noch 2 h bei 98 °C gerührt. Man erhält eine hellgelbe, klare Polymerlösung mit einem Feststoffgehalt von 40,2 % und einem K-Wert von 23,2 (1%-ig in entionisiertem Wasser).

Ansetzen der erfindungsgemäßen Zubereitungen

Die erfindungsgemäß eingesetzten Komponenten wurden in der erhaltenen wässrigen Polymerlösung gelöst, homogenisiert und in ein Tauchbad gefüllt.

Beispiel 1

Zubereitung aus 9,6 Gew.-% (bezogen auf Feststoff) Terpolymer (A.1), 0,4 Gew.-% hyperverzweigtes Polyetheraminpolyol (C.1) in Wasser

Beispiel 2

Zubereitung aus 9,3 Gew.-% (bezogen auf Feststoff) Terpolymer (A.1), 0,4 Gew.-% N-Methylglucamin, 0,4 Gew.-% $H_3PO_4$ in Wasser

Beispiel 3

Zubereitung aus 8,5 Gew.-% (bezogen auf Feststoff) Terpolymer (A.1), 0,8 Gew.-% Triethanolamin, 0,7 Gew.-% $H_3PO_4$,0,2 Gew.-% Magnesiumphosphat in Wasser

Vergleichsbeispiel 1

Zubereitung aus 10 Gew.-% (bezogen auf Feststoff) Terpolymer (A.1) in Wasser

Vergleichsbeispiel 2

Zubereitung aus 10 Gew.-% (bezogen auf Feststoff) Terpolymer (V2) hergestellt nach WO 2004/074372, Beispiel 2

Vergleichsbeispiel 3 (nicht in WO 2004/074372 offenbart)

Zubereitung aus 9,6 Gew.% (bezogen auf Feststoff) Terpolymer (V2), 0,4 Gew.-% hyperverzweigtes Polyetheraminpolyol (C.1) in Wasser

Vergleichsbeispiel 4 (nicht in WO 2004/074372 offenbart)

Zubereitung aus 8,5 Gew.% (bezogen auf Feststoff) Terpolymer (V2), 0,8 Gew.-% Triethanolamin, 0,7 Gew.% $H_3PO_4$, 0,2 Gew.-% Magnesiumphosphat in Wasser

Passivierung von metallischen Oberflächen

Metallische Oberfläche und deren Vorbehandlung:

Für die Tests wurden Prüfbleche aus heißverzinktem Stahl (105x390x0.75mm; 20 μm Zinkauflage, Gardobond OE HDG 3, Fa. Chemetall) eingesetzt.

Reinigung (Schritt 1):

Die Bleche wurden zunächst mit Ethanol und Ethylacetat entfettet und anschließend in eine alkalische Reinigungslösung (z.B. Ridoline C72, Fa. Henkel, 4,3 g/L bei 60 °C für 1 Minute) getaucht, sofort mit entionisiertem Wasser abgespült und anschließend mit Stickstoff getrocknet.

Aufbringen der Vorbehandlungsschicht (Schritt 2):

Die gereinigten Bleche wurden bei Raumtemperatur für jeweils 2 bis 3 s in die jeweilige Zubereitung (siehe Tabelle 1) getaucht, mit einem Walzensystem abgequetscht und für 15 bis 20 s bei 160 °C im Trockenschrank getrocknet. Die Peak-Metall-Temperatur im Zuge der Trocknung überstieg hierbei nicht 50 °C. Es wurden jeweils 2 Bleche beschichtet.

Aufbringen von Primer und Decklack (Schritt 3):

Die Bleche mit Vorbehandlungsschicht sowie ein kommerziell erhältliches Blech vorbehandelt mit Gardo TP10475 (Fa. Chemetall, Cr-frei, F-haltig), das als Referenzblech verwendet wird, wurden mittels eines Spiralrakels mit

dem jeweiligen Primer (siehe Tabelle 1) beschichtet und nach Herstellerangaben im Ofen eingebrannt, kurz in entionisiertes Wasser getaucht und mit Druckluft getrocknet. Anschließend wurde der jeweilige Decklack (siehe Tabelle 1) ebenfalls nach Herstellerangaben mittels eines Spiralrakels aufgetragen und im Ofen eingebrannt sowie die Bleche anschließend kurz in entionisiertes Wasser getaucht und vertikal getrocknet.

Prüfmethoden

Salzsprühtest:

Als Maß der korrosionsinhibierenden Wirkung dient das Ergebnis eines Salzsprühtests nach DIN 50021. Der Salzsprühtest wurde mit den komplett beschichteten Blechen (Schritte 1 bis 3) mit einem wohl definierten 0,3 mm breiten, 11 cm langen vertikalen zentrischen Ritz (durch die Lackschichten sowie die Zn-Beschichtung) durchgeführt; die Lagerzeit betrug 6 Wochen. Die Ergebnisse der Prüfungen sind in Tabelle 1 zusammengestellt. Die Korrosionsunterwanderung ist die durchschnittliche halbseitige Verbreiterung des ursprünglichen Ritzes. Es wurde der Durchschnittswert der untersuchten Bleche gebildet.

T-Bend Test:

Der T-bend Test wurde nach DIN EN ISO 1519:2003 mit den komplett beschichteten Blechen (Schritt 1-3) durchgeführt. Das Testergebnis ist in Tabelle 1 zusammengestellt und gibt die minimalen Distanzen an, die zwischen den beiden Seiten des gebogenen Blechs möglich sind, so dass keine Delaminierungserscheinungen auftreten. Die Werte sind in relativen Einheiten normiert auf die Bleche mit der kommerziell erhältlichen Vorbehandlung Gardo TP10475, Fa. Chemetall aufgelistet. Es wurde der Durchschnittswert der untersuchten Bleche gebildet.

Tape-Delaminierungs Test:

Der Tape Test wurde nach DIN EN ISO 1519:2003 mit den komplett beschichteten Blechen (Schritt 1-3) durchgeführt. Das Testergebnis ist in Tabelle 1 zusammengestellt und gibt die minimalen Distanzen an, die zwischen den beiden Seiten des gebogenen Blechs möglich sind, so dass keine Tape-Delaminierungserscheinungen an der Biegekante auftreten. Die Werte sind in relativen Einheiten normiert auf die Bleche mit der kommerziell erhältlichen Vorbehandlung Gardo TP10475, Fa. Chemetall aufgelistet. Es wurde der Durchschnittswert der untersuchten Bleche gebildet.

Tabelle 1

| Ergebnisse der Prüftests der lackierten Bleche | | | | | |
|---|---|---|---|---|---|
| **Vorbehandlung** | **Primer** | **Decklack** | **Korrosionsunterwanderung (mm)** | **T-bend Test (rel. Einheit)** | **Tape Test (rel. Einheit)** |
| Beispiel 1 | Coiltec® Universal P CF (BASF) | Polyceram® Plus P, weiß (BASF) | 0,2 | 100 | 45 |
| Beispiel 2 | Coiltec® Universal P CF (BASF) | Polyceram® Plus P, weiß (BASF) | 0,3 | 100 | 55 |
| Beispiel 3 | Coiltec® Universal P CF (BASF) | Polyceram® Plus P, weiß (BASF) | 0,2 | 95 | 45 |
| Vergleichsbeispiel 1 | Coiltec® Universal P CF (BASF) | Polyceram® Plus P, weiß (BASF) | 4,3 | 95 | 60 |
| Vergleichsbeispiel 2 | Coiltec® Universal P CF (BASF) | Polyceram® Plus P, weiß (BASF) | 95% des ges. Lackes abgelöst | 100 | 100 |

(fortgesetzt)

| Ergebnisse der Prüftests der lackierten Bleche | | | | | |
|---|---|---|---|---|---|
| **Vorbehandlung** | **Primer** | **Decklack** | **Korrosionsunterwanderung (mm)** | **T-bend Test (rel. Einheit)** | **Tape Test (rel. Einheit)** |
| Vergleichsbeispiel 3 | Coiltec® Universal P CF (BASF) | Polyceram® Plus P, weiß (BASF) | 95% des ges. Lackes abgelöst | 100 | 130 |
| Vergleichsbeispiel 4 | Coiltec® Universal P CF (BASF) | Polyceram® Plus P, weiß (BASF) | 95% des ges. Lackes abgelöst | 100 | 100 |
| **Gardo TP 10475 (Chemetall), fluorhaltig** | Coiltec® Universal P CF (BASF) | Polyceram® Plus P, weiß (BASF) | **0,8** | **100** | **100** |
| Beispiel 1 | Coiltec® Top P CF Universal (BASF) | Polyceram® Plus P, weiß (BASF) | 0,0 | 100 | 60 |
| Beispiel 2 | Coiltec® Top P CF Universal (BASF) | Polyceram® Plus P, weiß (BASF) | 0,0 | 100 | 60 |
| Beispiel 3 | Coiltec® Top P CF Universal (BASF) | Polyceram® Plus P, weiß (BASF) | 0,0 | 95 | 65 |
| Vergleichsbeispiel 1 | Coiltec® Top P CF Universal (BASF) | Polyceram® Plus P, weiß (BASF) | 0,1 | 100 | 80 |
| **Gardo TP 10475 (Chemetall), fluorhaltig** | Coiltec® Top P CF Universal (BASF) | Polyceram®Plus P, weiß (BASF) | **0,3** | **100** | **100** |
| Die Testergebnisse zeigen (Tabelle 1), dass mit der erfindungsgemäßen Zubereitung ein deutlich besserer Korrosionsschutz und sehr gute mechanische Eigenschaften erreicht werden als bei Verwendung von entsprechenden Zubereitungen gemäß dem Stand der Technik. | | | | | |

## Patentansprüche

1. Zubereitung zur Passivierung von metallischen Oberflächen, enthaltend

   a) mindestens ein Itaconsäure -Terpolymer (A), wobei das Polymer aus folgenden monomeren Einheiten aufgebaut ist:

      (a1) 35 bis 45 Gew. % Itaconsäure,
      (a2) 40 bis 50 Gew.-% Acrylsäure, sowie
      (a3) 5 bis 25 Gew.-% Vinylphosphonsäure,
      wobei die Menge jeweils auf die Gesamtmenge aller im Copolymer einpolymerisierten Monomere (a1) bis (a3) bezogen ist und sich die Mengen zu 100 Gew. % ergänzen;

   b) Wasser und/oder ein anderes Lösungsmittel, das geeignet ist, das Polymer (A) zu lösen, zu dispergieren,

zu suspendieren oder zu emulgieren, als Komponente (B); und
c) mindestens einen amin- oder amidhaltigen Alkohol (C),

2. Zubereitung gemäß Anspruch 1, enthaltend zusätzlich zu den Komponenten (A), (B) und (C) auch noch mindestens eine anorganische oder organische Säure und/oder ihre entsprechenden Salze als Komponente (D).

3. Zubereitung gemäß Anspruch 1 oder 2, **dadurch gekennzeichnet, dass** der amin- oder amidhaltige Alkohol (C) mindestens eine primäre, sekundäre oder tertiäre Alkylamin- oder amidverbindung, deren Alkylrest mindestens eine, vorzugsweise mehrere, Hydroxylgruppe(n) aufweist, und/oder mindestens ein hyperverzweigtes Polyetheraminpolyol ist.

4. Zubereitung gemäß einem der Ansprüche 1 bis 3, **dadurch gekennzeichnet, dass** der amin- oder amidhaltige Alkohol (C) ausgewählt ist aus der Gruppe enthaltend Mono-, Di- und Tri-$C_1$-$C_6$-alkanolamine, Mono-, Di- und Tri-$C_1$-$C_6$-alkanolamide, primäre, sekundäre oder tertiäre Amine von Zuckeralkoholen, primäre, sekundäre oder tertiäre Amide von Zuckeralkoholen und hyperverzweigte Polyetheraminpolyole.

5. Verfahren zur Herstellung einer Passivierungsschicht auf einer Metalloberfläche, **dadurch gekennzeichnet, dass** die Metalloberfläche mit einer Zubereitung gemäß einem der Ansprüche 1 bis 4 behandelt wird.

6. Verfahren gemäß Anspruch 5, **dadurch gekennzeichnet, dass** es sich bei der Metalloberfläche um die Oberfläche eines Bandmetalles handelt.

7. Verfahren gemäß Anspruch 6, **dadurch gekennzeichnet, dass** es sich bei dem Bandmetall um elektrolytisch verzinkten oder heißverzinkten Stahl handelt.

8. Verfahren gemäß den Ansprüchen 5 bis 6, **dadurch gekennzeichnet, dass** man die Behandlung mittels eines kontinuierlichen Verfahrens vornimmt.

9. Passivierungsschicht auf einer metallischen Oberfläche erhältlich durch ein Verfahren gemäß einem der Ansprüche5 bis 6.

10. Metallische Oberfläche umfassend eine Passivierungsschicht gemäß Anspruch9.

11. Metallische Oberfläche gemäß Anspruch10, **dadurch gekennzeichnet, dass** sich auf der Passivierungsschicht noch eine oder mehrere übereinander angebrachte Lackschichten befinden.

12. Verwendung einer Zubereitung gemäß den Ansprüchen 1 bis 4 zur Passivierung einer Metalloberfläche.

## Claims

1. A preparation for passivating metallic surfaces, comprising

a) at least one itaconic acid terpolymer (A), the polymer being synthesized from the following monomeric units:

(a1) 35% to 45% by weight of itaconic acid,
(a2) 40% to 50% by weight of acrylic acid, and
(a3) 5% to 25% by weight of vinylphosphonic acid,
the amount being based in each case on the total amount of all the monomers (a1) to (a3) copolymerized in the copolymer, and the amounts adding up to 100% by weight;

b) water and/or another solvent suitable for dissolving, dispersing, suspending or emulsifying polymer (A), as component (B); and
c) at least one amine- or amide-containing alcohol (C).

2. The preparation according to claim 1, comprising, further to components (A), (B) and (C), at least one inorganic or organic acid and/or corresponding salts thereof, as component (D).

**3.** The preparation according to claim 1 or 2, wherein the amine- or amide-containing alcohol (C) is at least one primary, secondary or tertiary alkylamine or amide compound whose alkyl radical contains at least one, preferably two or more, hydroxyl group(s), and/or is at least one hyperbranched polyetheramine polyol.

**4.** The preparation according to any of claims 1 to 3, wherein the amine- or amide-containing alcohol (C) is selected from the group containing mono-, di-, and tri-$C_1$-$C_6$-alkanolamines, mono-, di-, and tri-$C_1$-$C_6$-alkanolamides, primary, secondary or tertiary amines of sugar alcohols, primary, secondary or tertiary amides of sugar alcohols, and hyperbranched polyetheramine polyols.

**5.** A method of producing a passivating layer on a metal surface, which comprises treating the metal surface with a preparation according to any of claims 1 to 4.

**6.** The method according to claim 5, wherein the metal surface is the surface of a strip metal.

**7.** The method according to claim 6, wherein the strip metal comprises electrolytically galvanized or hot dip galvanized steel.

**8.** The method according to claims 5 to 6, wherein the treatment is performed by means of a continuous process.

**9.** A passivating layer on a metallic surface, obtainable by a method according to any of claims 5 to 6.

**10.** A metallic surface comprising a passivating layer according to claim 9.

**11.** The metallic surface according to claim 10, wherein one or more paint coats applied one above another are further present on the passivating layer.

**12.** The use of a preparation according to claims 1 to 4 for passivating a metal surface.

## Revendications

**1.** Préparation pour la passivation de surfaces métalliques, contenant

a) au moins un terpolymère de l'acide itaconique (A), le polymère étant formé à partir des unités monomères suivantes :

(a1) 35 à 45 % en poids d'acide itaconique,
(a2) 40 à 50 % en poids d'acide acrylique et
(a3) 5 à 25 % en poids d'acide vinylphosphonique, la quantité se rapportant à chaque fois à la quantité totale de tous les monomères (a1) à (a3) copolymérisés dans le copolymère et la somme des quantités étant de 100 % en poids ;

b) de l'eau et/ou un autre solvant approprié pour dissoudre, disperser, suspendre ou émulsifier le polymère (A), en tant que composant (B) ; et
c) au moins un alcool contenant une amine ou un amide (C).

**2.** Préparation selon la revendication 1, contenant en plus des composants (A), (B) et (C) également encore au moins un acide inorganique ou organique et/ou ses sels correspondants en tant que composant (D).

**3.** Préparation selon la revendication 1 ou 2, **caractérisée en ce que** l'alcool contenant une amine ou un amide (C) est au moins un composé d'alkylamine ou d'alkylamide primaire, secondaire ou tertiaire, dont le radical alkyle comprend au moins un, de préférence plusieurs, groupe(s) hydroxyle, et/ou au moins un polyétheraminopolyol hyperramifié.

**4.** Préparation selon l'une quelconque des revendications 1 à 3, **caractérisée en ce que** l'alcool contenant une amine ou un amide (C) est choisi dans le groupe contenant les mono-, di- et tri-alcanolamines en $C_1$-$C_6$, les mono-, di- et tri-alcanolamides en $C_1$-$C_6$, les amines primaires, secondaires ou tertiaires de polyols, les amides primaires, secondaires ou tertiaires de polyols et les polyétheraminopolyols hyperramifiés.

**5.** Procédé de fabrication d'une couche de passivation sur une surface métallique, **caractérisé en ce que** la surface métallique est traitée avec une préparation selon l'une quelconque des revendications 1 à 4.

**6.** Procédé selon la revendication 5, **caractérisé en ce que** la surface métallique est la surface d'une bande métallique.

**7.** Procédé selon la revendication 6, **caractérisé en ce que** la bande métallique est un acier galvanisé électrolytiquement ou galvanisé à chaud.

**8.** Procédé selon les revendications 5 à 6, **caractérisé en ce que** le traitement est réalisé par un procédé continu.

**9.** Couche de passivation sur une surface métallique, pouvant être obtenue par un procédé selon l'une quelconque des revendications 5 à 6.

**10.** Surface métallique comprenant une couche de passivation selon la revendication 9.

**11.** Surface métallique selon la revendication 10, **caractérisée en ce qu'**une ou plusieurs couches de vernis appliquées les unes sur les autres se trouvent encore sur la couche de passivation.

**12.** Utilisation d'une préparation selon les revendications 1 à 4 pour la passivation d'une surface métallique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4384902 A
- DE 19516765 A
- DE 19754108 A
- WO 2004074372 A1
- WO 2006021309 A1
- WO 2006021309 A
- US 2178173 A
- US 2290415 A
- US 2407895 A
- DE 4003243
- WO 09047269 A
- WO 2009047269 A2
- WO 2005042801 A1
- WO 2004074372 A


### In der Beschreibung aufgeführte Nicht-Patentliteratur


- **P.J. FLORY.** *J. Am. Chem. Soc.,* 1952, vol. 74, 2718
- **H. FREY et al.** *Chem. Eur. J.,* 2000, vol. 6 (14), 2499
- **J.M.S.** *Rev. Macromol. Chem. Phys.,* 1997, vol. C37 (3), 555-579
- **H. FIKENTSCHER.** *Cellulose-Chemie,* 1932, vol. 13, 58-64, 71-74